(19) Europäisches Patentamt
European Patent Office
Office européen des brevets

(11) **EP 1 717 631 B1**

(12) **EUROPÄISCHE PATENTSCHRIFT**

(45) Veröffentlichungstag und Bekanntmachung des Hinweises auf die Patenterteilung:
**27.02.2013  Patentblatt 2013/09**

(51) Int Cl.:
***G02B 26/08*** *(2006.01)*

(21) Anmeldenummer: **05008998.6**

(22) Anmeldetag: **25.04.2005**

(54) **Mikrooptische Anordnung**

Micro-optical arrangement

Dispositif micro-optique

(84) Benannte Vertragsstaaten:
**AT BE BG CH CY CZ DE DK EE ES FI FR GB GR HU IE IS IT LI LT LU MC NL PL PT RO SE SI SK TR**

(43) Veröffentlichungstag der Anmeldung:
**02.11.2006  Patentblatt 2006/44**

(73) Patentinhaber: **Fraunhofer-Gesellschaft zur Förderung der angewandten Forschung e.V. 80686 München (DE)**

(72) Erfinder:
• **Schenk, Harald**
**01139 Dresden (DE)**

• **Drabe, Christian**
**01099 Dresden (DE)**

(74) Vertreter: **Pfenning, Meinig & Partner GbR Patent- und Rechtsanwälte An der Frauenkirche 20 01067 Dresden (DE)**

(56) Entgegenhaltungen:
WO-A-2004/113990       FR-A- 2 733 327
US-A- 5 742 419         US-A- 5 862 003
US-A- 5 880 896         US-A1- 2003 169 516
US-A1- 2003 214 734     US-A1- 2004 160 118
US-B1- 6 247 364

**Beschreibung**

Die Erfindung betrifft eine mikrooptische Anordnung, bei der insbesondere optische Eigenschaften eines optischen Elementes oder dessen Beeinflussung elektromagnetischer Strahlung verändert werden kann. Ein solches optisches Element kann bevorzugt eine reflektierende Oberfläche aufweisen und dabei die jeweilige Brennweite in bestimmten vorgebbaren Grenzen auch in Kombination mit weiteren optischen Elementen variiert werden. Die an einer erfindungsgemäßen mikrooptischen Anordnung eingesetzten optischen Elemente sind dabei im Bereich bis zu einigen wenigen Millimetern bzgl. ihrer äußeren Abmessungen dimensioniert, wobei 20 mm die Obergrenze darstellen dürfte.

Auch für mikrooptische Anordnungen besteht häufig das Erfordernis der Variation von Brennweiten oder auch anderen optischen Parametern, die in der Regel entweder durch einen aufwendigen optischen Aufbau oder mit erhöhter Zeitkonstante realisiert werden können.

Das konfokale Messprinzip wird zur Erfassung von O-berflächentopologien an Gegenständen eingesetzt. Dabei wird die Brennpunktlage bezüglich zur Oberfläche (Z-Richtung) variiert. Üblicherweise wird so vorgegangen, dass der optische Weg von der jeweiligen Lichtquelle (z. B. Punktlichtquelle) zum jeweiligen Gegenstand verändert wird. Aufgrund von fokussierenden und ggf. auch kollimierenden optischen Elementen im Strahlengang wird die Position des Brennpunktes beeinflusst. In einer anderen Alternative kann allein oder zusätzlich auch der zu untersuchende Gegenstand bewegt werden und dementsprechend eine Veränderung des Abstandes erfolgen, so dass die jeweilige Brennpunktlage angepasst werden kann.

Beim Auslesen von Strichcodes muss berücksichtigt werden, dass die jeweilige Position des Brennpunktes die Position, an dem der jeweilige Strichcode mit der höchsten Dichte erfasst werden kann, bestimmt. Je größer dieser Abstand zwischen dem Strichcode und dem Brennpunkt ist, umso geringer ist aber das Auslösungsvermögen eines hierfür eingesetzten Scanners. Die Leistung und Auflösungsvermögen des Scanners sind aber limitiert.

Für Fälle in denen eine entsprechende Abstandsänderung des jeweiligen Gegenstandes/Strichcodes nicht möglich oder nicht erwünscht ist, sind zwei Lösungsansätze bekannt.

In einer ersten Alternative kann eine Verlängerung der optischen Weglänge zwischen der jeweiligen Lichtquelle mit einem zusätzlichen optischen Element, nämlich einem planaren Spiegel, der senkrecht zum einfallenden Licht oder anderer elektromagnetischer Strahlung auch im sichtbaren Wellenlängenbereich des Lichts bewegt wird, erreicht werden. Für die Bewegung eines solchen Spiegels ist ein entsprechender Antrieb erforderlich, der zum Beispiel auf einem elektromagnetischen Prinzip beruhen kann. Hierbei ergeben sich aber Nachteile, dass insbesondere bei einem mikrooptischen Aufbau ein hoher Fertigungsaufwand mit entsprechend hohen Kosten auftreten und außerdem die Miniaturisierung wegen des erforderlichen Bauvolumens reduziert ist. Diese mit einer Mindestgröße in herkömmlicher Fernwerktechnik hergestellten Spiegel weisen auch eine höhere Eigenmasse auf.

Insbesondere für mobile Anwendungen, wie dies beispielsweise bei manuell handhabbaren Scannern der Fall ist, ist eine solche Lösung ungeeignet. Auch erfordert eine solche Bewegung eines Spiegels eine erhöhte Zeit, so dass sich die Zeitkonstante entsprechend erhöht. Es ergibt sich dabei auch eine Begrenzung der möglichen Veränderbarkeit der optischen Weglänge unter Berücksichtigung des gewünschten Miniaturisierungseffektes.

In einer zweiten Alternative können auch deformierbare optische reflektierende Elemente (Spiegel) eingesetzt werden. Dabei kann die Deformation zu einer veränderbaren Brennweite eines Hohlspiegels führen. Die Deformation solcher reflektierender optischer Elemente wird üblicherweise mit Aktuatoren realisiert, die unterhalb des reflektierenden optischen Elementes angeordnet sind. Solche adaptiv-optischen Systeme werden üblicherweise durch Piezoaktoren deformiert.

Auch bei diesen Lösungen wirken sich der Kostenaspekt und die erforderlichen Volumina nachteilig aus.

Bei mikromechanisch hergestellten deformierbaren reflektierenden optischen Elementen können kleinere Volumina und reduzierte Kosten erreicht werden. Dabei wird die Deformation statisch bzw. quasi statisch mittels elektrostatischer Wirkung erreicht. Häufig werden dabei mehrere solcher optischen Elemente als Arrays aus einzelnen, translatorisch und ggf. zusätzlich rotatorisch verstellbarer reflektierender optischer Elemente oder auch Membranspiegel eingesetzt, wie dies von S. Cornellison u. a. in "MEMS Spatial Light Modulators with Integrated Electronics"; MOEMS and Miniaturized Systems II; Proc. SPIE. Vol. 4561 (2001); Seiten 28 - 34 bekannt ist. Dabei bestehen Membranspiegel aus einer kontinuierlichen Spiegelmembran die durch unter einer Membran angeordnete Aktoren deformiert werden. Eine Segmentierung der reflektierenden Oberfläche oder von Aktuatoren ermöglicht unterschiedliche Deformationsprofile. Sie hat aber den Nachteil, dass die Strahlqualität aufgrund höherer Ortsfrequenzen in der reflektierenden Fläche die Strahlqualität reduziert. Die Ansteuerung ist aufwendig, da jeder Aktuator unabhängig angesteuert werden muss und eine hohe Anzahl von Aktuatoren notwendig ist, um das jeweilige Deformationsprofil mit guter Näherung zu erreichen.

Aus US 2003/0214734 A1 ist ein variabler Reflektor mit einer optischen Anordnung bekannt, mit der der Reflektor oder Spiegel aus einem flexiblen Material besteht und seine Oberflächenkonfiguration verändern kann. Dies erfolgt unter Nutzung magnetischer sowie elektrischer Kraftwirkung.

Es ist daher Aufgabe der Erfindung eine mikrooptische Anordnung zur Verfügung zu stellen, bei der eine Veränderbarkeit optischer Parameter, insbesondere der Brennweite mit geringer Zeitkonstante, kostengünstig und mit kleinem erforderlichem Bauvolumen zur Verfügung zu stellen.

Erfindungsgemäß wird diese Aufgabe mit einer mikrooptischen Arlordnung, die die Merkmale des Anspruchs 1 aufweist, gelöst.

Vorteilhafte Ausgestaltungsformen und Weiterbildungen der Erfindung können mit den in den untergeordneten Ansprüchen bezeichneten Merkmalen erreicht werden.

Bei der Erfindung wird ausgenutzt, dass eine elastische Verformung eines optischen Elementes in Folge seiner Massenträgheit bei einer Beschleunigung mit einhergehender translatorischer Bewegung auf das jeweilige optische Element wirkt. Ein solches optisches Element ist dabei an mindestens einem äußeren Randpunkt, bevorzugt an mindestens zwei Randpunkten fixiert gehalten oder eingespannt.

Wird nunmehr ein so gehaltenes oder eingespanntes optisches Element zumindest nahezu parallel zu seiner optischen Achse translatorisch zwischen zwei Umkehrpunkten hin und her bewegt, wirken an dem optischen Element wechselnde Beschleunigungen mit wechselnder Richtung, so dass sich ein entsprechend gestaltetes und dimensioniertes optisches Element in Folge seiner eigenen Massenträgheit elastisch verformen kann. Dabei kann die translatorische Bewegung genau parallel zur optischen Achse oder ggf. mit einer Winkelabweichung von bis zu $\pm$ 25° dazu erfolgen. Dementsprechend verformt sich auch zumindest eine an einem optischen Element vorhandene optisch wirksame Oberfläche so dass auch eine Veränderung von Einfallswinkeln von elektromagnetischen Strahlen auf eine so verformte optische aktive Oberfläche auftritt. Dies führt dann beispielsweise dazu, dass eine entsprechende Variation der Brennweite für von der optisch wirksamen Oberfläche reflektierte elektromagnetische Strahlung erreichbar ist. Die elastische Verformung führt je nach Bewegungsrichtung der translatorischen Bewegung zu einer konkaven oder konvexen Krümmung der optisch wirksamen Oberfläche, wobei bei einem Nulldurchgang, also in der Mitte zwischen den beiden jeweiligen Umkehrpunkten der translatorischen Bewegung keine Beschleunigung auf dieses optische Element wirkt, so dass in diesem Bereich der Bewegung keine Verformung zu verzeichnen ist und für den Fall, dass die optisch wirksame Oberfläche des optischen Elementes eine planare ebene Fläche ist, diese im Bereich des Nulldurchgangs eine senkrecht zur optischen Achse ausgerichtete Fläche bildet.

An den Umkehrpunkten ist dann je nach Ausrichtung der optisch wirksamen Oberfläche und der jeweiligen translatorischen Bewegungsrichtung eine maximale konkave oder konvexe Wölbung der optischen Oberfläche zu verzeichnen.

Die translatorische Bewegung kann mit konstanter Frequenz durchgeführt werden.

Ein entsprechend elastisch verformbares optisches Element kann beispielsweise in Form einer dünnen Platte mit unterschiedlichen Außenkonturen ausgebildet sein, die im nicht deformierten Zustand quasi eine planparallele Platte bildet. Dabei kann die Dicke unter Berücksichtigung der Eigenmasse des optischen Elementes so gewählt werden, dass die Massenträgheit, bei der auf das optische Element wirkenden Beschleunigung zu einer nutzbaren elastischen Verformung führt.

Das optische Element kann mittels eines Rahmens fixiert oder eingespannt sein, wobei der Rahmen dann ebenfalls translatorisch zwischen den Umkehrpunkten mit dem optischen Element hin und her bewegt wird.

Im einfachsten Fall kann ein solches optisches Element an jeweils zwei exakt gegenüberliegenden Seiten fixiert gehalten oder eingespannt sein, so dass sich unterschiedliche Geometrien für eine entsprechend verformte optisch wirksame Oberfläche ausnutzen lassen.

So kann beispielsweise ein optisches Element mit rechteckiger oder quadratischer Außenkontur an sich jeweils gegenüberliegend angeordneten Stirnseiten fixiert gehalten oder eingespannt werden. In diesem Fall kann durch die elastische Verformung eine Variation eines Linienfokus erreicht werden.

Bei optischen Elementen mit kreisförmiger oder ellipsenförmiger Außenkontur kann die Einspannung über den gesamten Umfang in einem Rahmen oder mit über dem Umfang, bevorzugt äquidistant angeordneten Lagern oder Gelenken erfolgen.

Dabei sollte ein solcher Rahmen oder ein äquivalent wirkendes Element eine höhere Festigkeit und Steifigkeit aufweisen, die zu keiner bzw. zu einer zu vernachlässigbaren Verformung bei den wirkenden Beschleunigungen führt.

Dadurch kann zumindest bereichsweise eine nahezu sphärische elastische Verformung der optisch wirksamen Oberfläche, auf die die jeweilige elektromagnetische Strahlung, beispielsweise Licht auftrifft, erreicht werden.

Bei der translatorischen Hin-und-Her-Bewegung zwischen den beiden Umkehrpunkten $-Z_0$ und $+Z_0$ erfolgt in der Mitte ein Nulldurchgang "0". So ist am Umkehrpunkt $-Z_0$ ein Krümmungsradius $-R$ und eine Brennweite $-R/2$ und am jeweils anderen Umkehrpunkt $+Z_0$ ein Krümmungsradius $+R$ und eine Brennweite $+R/2$ erreichbar. Beim Nulldurchgang liegen Krümmungsradius und Brennweite bei unendlich, wenn die optisch wirksame Oberfläche des optischen Elementes als ebene planare Fläche, die senkrecht zur optischen Achse ausgerichtet ist, ausgebildet ist.

So ist ohne zusätzliche Maßnahmen eine sinnvolle Nutzung in einem Bereich in der Nähe und unmittelbar an den Umkehrpunkten sehr gut möglich.

Dies kann aber durch den Einsatz zusätzlicher optischer Elemente, die im Strahlengang zwischen einer Lichtquelle, bevorzugt einer Punkt- oder Strichlichtquelle, angeordnet sind, beseitigt oder verbessert werden.

So kann im Strahlengang zwischen Lichtquelle und dem optischen Element eine weitere optische Linse mit konstanter Brennweite angeordnet werden, über die auf eine optisch wirksame Oberfläche des optischen Elementes auftreffende Strahlung, auf diese gerichtet ist. Von der optisch wirksamen Oberfläche rückreflektierte elektromagnetische Strahlung kann über diese optische Linse mit der konstanten Brennweite weiter eingestrahlt und die entsprechende Abbildung beispielsweise auf einen oder mehrere optische Detektoren gerichtet werden.

Allein oder zusätzlich kann die von einer Lichtquelle ausgehende elektromagnetische Strahlung auch über ein reflektierendes optisches Element auf die optisch wirksame Oberfläche des optischen Elementes gerichtet und dabei umgelenkt werden. Bevorzugt kann hierfür ein optischer Strahlteiler entsprechend angeordnet und ausgerichtet werden.

Eine mikrooptische Anordnung mit dem elastisch verformbaren optischen Element und einer optischen Linse kann über die einfache Brennweitengleichung eines Linsendupletts beschrieben werden. Die optische Linse mit konstanter Brennweite kollimiert die elektromagnetische Strahlung parallel zur optischen Achse auf die optisch wirksame Oberfläche des elastisch verformbaren optischen Elementes und wird von dieser optisch wirksamen Oberfläche wieder auf die optische Linse mit einer der jeweiligen elastischen Verformung entsprechenden Brennweite fokussiert. Diese Brennweite ist von der jeweiligen Position des optischen Elementes zwischen den beiden Umkehrpunkten $+Z_0$ und $-Z_0$ abhängig und die jeweilige Brennweite kann mit der Gleichung:

$$\frac{1}{f} = \frac{1}{f_1} + \frac{1}{f_s} - \frac{d - z}{f_1 f_s}$$

Dabei ist $f_1$ die konstante Brennweite der optischen Linse, $f_s$ die variable Brennweite des elastisch verformbaren optischen Elementes an der optisch wirksamen Oberfläche, d der Abstand zwischen der Mitte der optischen Linse und dem Nulldurchgang des optischen Elementes, also bei z=0 und z die jeweilige Position des optischen Elementes. Die Amplitude $z_0$ der translatorischen Bewegung des optischen Elementes soll im Folgenden stets als positiver Wert angenommen werden.

Daraus ergeben sich eine Gesamtbrennweite einer Anordnung, bestehend aus elastisch verformbaren optischen Element und zusätzlicher optischer Linse, bei einer Annahme von $z_0$ = 0,1 mm, d = 1,0 mm, R = 150 mm und $f_1$ = 50 mm. Die Werte für eine z-Position des Brennpunktes $z_B$ können aus nachfolgender Tabelle unter Berücksichtigung der darin angegebenen Berechnungsgleichungen entnommen werden.

| Position z des deformierbaren Spiegels | Brennweite des Duplets | z-Position des Brennpunktes $z_B$ | Zahlenwerte für $z_B$ aus Beispiel 1 |
|---|---|---|---|
| $-z_0$ | $\frac{1}{f} = \frac{1}{f_1} - \frac{2}{R} + \frac{2(d + z_0)}{f_1 R}$ | $z_B$ = f + d | 145 mm |
| 0 | $f = f_1$ | $z_B = f_1 + d$ | 51 mm |
| $+z_0$ | $\frac{1}{f} = \frac{1}{f_1} - \frac{2}{R} + \frac{2(d - z_0)}{f_1 R}$ | $z_B$ = f + d | 31 mm |

Daraus folgt, dass bei einem solchem Beispiel die Position des Brennpunktes $z_B$ um 114 mm verändert werden kann.

Die translatorische Bewegung, die unter Ausnutzung der Massenträgheit zur elastischen Verformung des optischen Elementes führt, kann magnetisch, elektromagnetisch, elektrostatisch, magnetostriktiv und/oder piezoelektrisch initiiert werden. So können entsprechende Aktuatoren, Magnete, Elektromagnete oder Elektroden so angeordnet werden, dass durch entsprechende Beeinflussung das jeweilige optische Element, ggf. auch mit dem Rahmen oder einem entsprechend äquivalent wirkenden Mittel zwischen den Umkehrpunkten hin und her translatorisch bewegt wird. So kann beispielsweise mindestens ein entsprechender Aktuator unmittelbar am Rahmen angreifen und eine entsprechende Bewegung übertragen. Magnete, Elektromagnete oder auch Elektroden können entsprechend angeordnet und gesteuert werden, wobei im Falle von Magneten mit vorgebbarer Frequenz magnetische Kurzschlüsse zur translatorischen Hin- und Herbewegung führen und bei Elektromagneten sowie Elektroden mit wechselnder Potentialdifferenz gearbeitet werden kann.

An einem an einer erfindungsgemäßen mikrooptischen Anordnung einsetzbaren, elastisch verformbaren optischen Element können aber auch Festkörpergelenke ausgebildet sein. Dies ist mittels punkt- oder nutenförmiger Vertiefungen und/oder Spalten am/im optischen Element möglich.

So können Vertiefungen vorteilhaft an der der optisch wirksamen Oberfläche gegenüberliegenden Oberfläche des optischen Elementes ausgebildet sein.

Festkörpergelenke können aber auch mittels Spalten, die im optischen Element ausgebildet sind, hergestellt werden, wobei dies über eine geeignete Anordnung mehrerer solcher Spalten möglich ist. Die Anordnung solcher Spalten kann unter Berücksichtigung der geometrischen Gestaltung der äußeren Randkontur des optischen Elementes gewählt werden und es sollten dabei zwischen den jeweiligen Spalten geschlossene Stege vorhanden sein.

In diesem Fall kann vorteilhaft auf einer optisch wirksamen Oberfläche des optischen Elementes eine elastisch verformbare reflektierende Folie oder Membran aufgebracht bzw. daran befestigt werden.

Neben der Möglichkeit der Beeinflussung der elastischen Verformung des optischen Elementes mittels von Festkörpergelenken besteht aber auch die Möglichkeit, eine Beeinflussung der Oberflächentopologie an einem optischen Element vorzusehen. So kann die der optisch wirksamen Oberfläche gegenüberliegend angeordnete Oberfläche strukturiert und/oder gewölbt ausgebildet werden, was zu einer entsprechenden Steifigkeits- und/oder Masseverteilung am jeweiligen optischen Element führt, mit der über die entsprechenden Massenträgheiten Einfluss auf die beschleunigungsbedingte elastische Verformung des optischen Elementes ausgebildet werden kann.

Das elastisch verformbare optische Element kann aber auch nicht unmittelbar am Rahmen fixiert oder eingespannt werden. Hierfür können zwischen einem äußeren Randbereich des elastisch verformbaren optischen Elementes und dem Rahmen Feder- oder auch Federdämpferelemente angeordnet sein, über die die Fixierung des elastisch verformbaren optischen Elementes am Rahmen erreichbar ist. So kann ein Feder-Massesystem gebildet werden.

Neben der bereits erwähnten Variationsmöglichkeit der Brennweite oder auch Divergenz von von der aktiven Oberfläche des elastisch verformbaren Elementes reflektierter elektromagnetischer Strahlung besteht auch die Möglichkeit eine Strahlformung vorzusehen, was insbesondere eine gezielte Beeinflussung der Geometrie des Querschnitts des reflektierten Strahls elektromagnetischer Strahlung betrifft.

Nachfolgend soll die Erfindung beispielhaft näher erläutert werden.

Dabei zeigen:

Figur 1          eine schematische Darstellung eines Beispiels einer erfindungsgemäßen mikrooptischen Anordnung mit einem elastisch verformbaren Element und weiteren optischen Elementen;

Figur 2          eine perspektivische Darstellung eines elastisch verformbaren optischen Elementes, das mit seinem äußeren Rand in einem Rahmen fixiert ist;

Figuren 3 bis 6   in schematischer Darstellung Verformungen eines elastisch verformbaren Elementes bei unterschiedlichen auf dieses wirkenden Beschleunigungen;

Figur 7          ein Beispiel, bei dem ein elastisch verformbares optisches Element mittels eines Paares von Dreiecksfedern aufgespannt ist und

Figur 8          ein Beispiel eines elastisch verformbaren Elementes, das durch Segmentierung mit vorgebbarem Deformationsprofil elastisch verformbar ist.

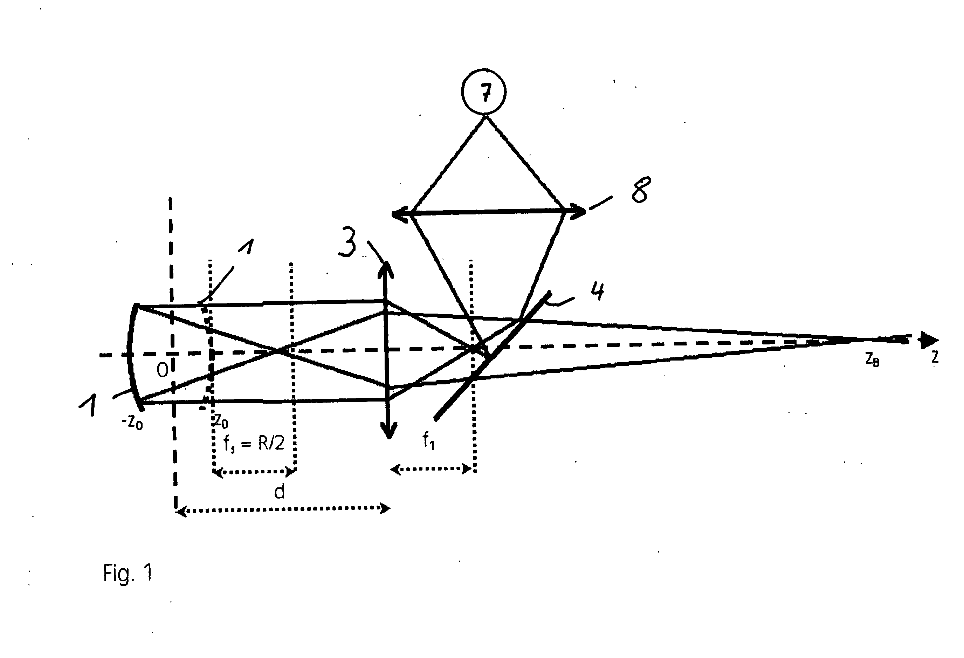

In Figur 1 ist in schematischer Form ein Beispiel einer mikrooptischen Anordnung mit mehreren optischen Elementen, wie bereits im allgemeinen Teil der Beschreibung angedeutet worden ist, gezeigt.

Dabei wird elektromagnetische Strahlung von einer Punktlichtquelle 7 emittiert. Diese wird mittels einer optischen Linse 8 auf einen in Bezug zur optischen Achse um 45 Grad geneigten Strahlteiler 4 gerichtet und von dort über eine optische Linse 3, mit konstanter Brennweite in kollimierter Form auf eine optisch wirksame Oberfläche eines elastisch verformbaren optischen Elementes 1 gerichtet.

Das elastisch verformbare optische Element 1 ist in Figur 1 an Umkehrpunkten $-z_0$ und $z_0$ einer translatorischen Hin- und Herbewegung parallel zur optischen Achse des elastisch verformbaren optischen Elementes 1 mit der jeweiligen Verformung dargestellt.

In Folge der wirkenden Beschleunigung und der Massenträgheit des elastisch verformbaren optischen Elementes 1 kann im Umkehrpunkt $-z_0$ eine konkave Krümmung der optisch wirksamen, hier reflektierenden Oberfläche des elastisch verformbaren optischen Elementes 1 erreicht werden, so dass entsprechend der Verformung mit einem Radius aus R/2 eine Brennweite $f_s$ eine Fokussierung der reflektierten elektromagnetischen Strahlung erreicht ist. Mit der optischen Linse 3 erfolgt eine erneute Fokussierung, so dass eine Vergrößerung der Gesamtbrennweite erreichbar ist und sich somit die z-Position des Brennpunktes $Z_B$ mit erhöhtem Abstand ergibt.

Möglichkeiten für andere Positionen für den Brennpunkt bei Nulldurchgang und $Z_0$ können Tabelle 1 der allgemeinen Beschreibung entnommen werden.

Somit ergibt sich ein vergrößerter Bereich, bei dem eine entsprechende mikrooptische Anordnung mit ausreichend hohem Auflösungsvermögen bei unterschiedlichen Abständen von Objekten genutzt werden kann.

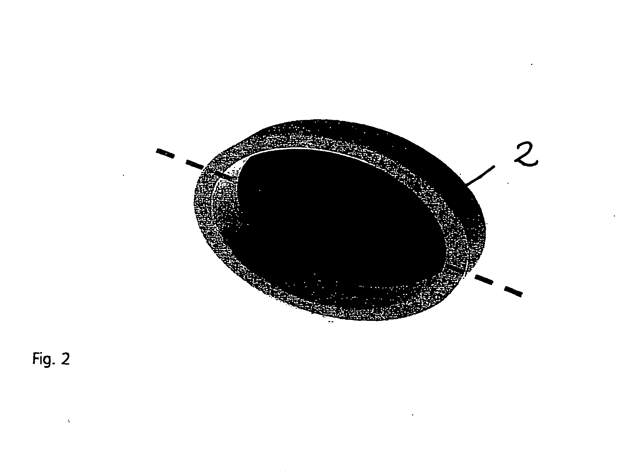

In Figur 2 ist in perspektivischer Darstellung ein elastisch verformbares optisches Element 1 mit kreisförmiger Außenkontur, das in einem Rahmen 2 mit deutlich erhöhter Festigkeit und Steifigkeit, insbesondere unter Berücksichtigung der Vektoren der translatorischen Hin- und Herbewegung dargestellt.

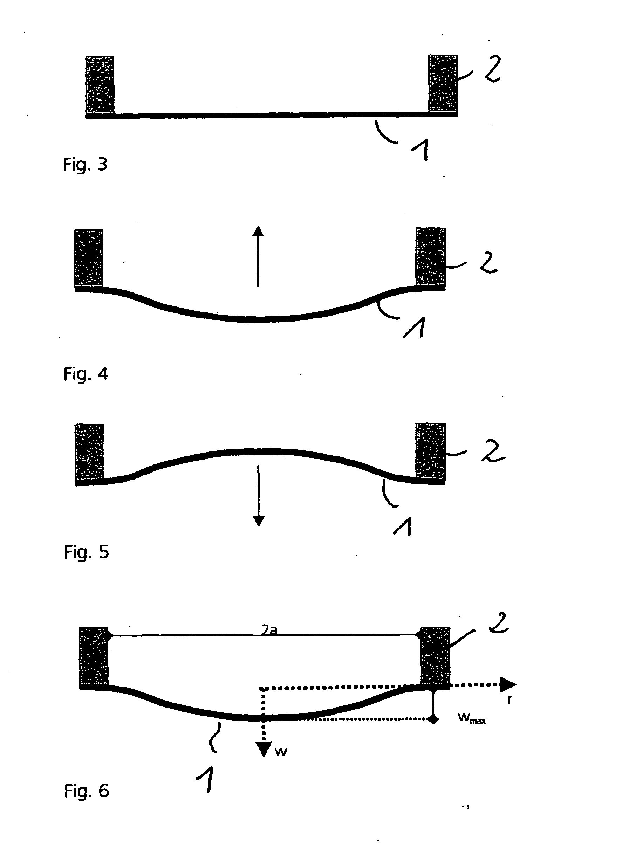

Die Darstellungen der Figuren 3 bis 6 sind Querschnitte entlang der gestrichelten Linie aus Figur 2.

In Figur 3 ist das elastisch verformbare optische Element 1, bei einer Beschleunigung von 0, wie sie auch beim Nulldurchgang wirkt, dargestellt. Die Figuren 4 bis 6 zeigen elastische Verformungen durch konvexe und konkave Krümmung des elastisch verformbaren Elementes 1, wie sie mit dem größten Radius R/2 in den beiden Umkehrpunkten $-z_0$ und $z_0$ auftreten kann.

Das elastisch verformbare Element 1 kann beispielsweise eine planparallele Platte, die zumindest einseitig eine reflektierende Oberfläche aufweist, sein. Sie kann beispielsweise aus Silicium, Siliciumnitrid, $SiO_2$, $MgF_2$ oder auch einem Glas hergestellt und ggf. auch mit einer reflektierenden Beschichtung versehen worden sein.

Ein randseitig in einem Rahmen eingespanntes elastisch verformbares optisches Element 1 mit konstanter Flächenlast lässt sich gemäß folgender Gleichung berechnen:

$$w(r) = w_{max}\left(1 - \frac{r^2}{a^2}\right)^2$$

$w_{max}$ beschreibt dabei die maximale Auslenkung des elastisch verformbaren optischen Elementes 1, die bei r=0 auftritt. Sie wird durch die flächenmäßige Ausdehnung des elastisch verformbaren Elementes 1, seiner Steifigkeit und seiner Flächenlast bestimmt.

Um als konkav bzw. konvex gewölbtes reflektierendes optisches Element zu fungieren, muss die elastische Verformung sphärisch sein.

Eine rein sphärische elastische Verformung mit dem Radius R lässt sich wie folgt beschreiben:

$$w_{sph}(r) = R\sqrt{1 - \frac{r^2}{R^2}} - R + w_{max}$$

Eine Abweichung $\Delta w$ von der sphärischen Form kann nach der Taylorentwicklung der sphärischen Deformation und unter Vernachlässigung aller Terme ab der 6. Ordnung in r wie folgt ausgedrückt werden:

$$\Delta w = -2w_{max}\left(\frac{r}{a}\right)^2 + \frac{R}{2}\left(\frac{r}{R}\right)^2 + w_{max}\left(\frac{r}{a}\right)^4 + \frac{R}{8}\left(\frac{r}{R}\right)^4$$

Die quadratischen r-Terme können unter der Bedingung:

$$R = \frac{a^2}{4w_{max}}$$

vernachlässigt werden.

So kann der Radius des annähernd sphärischen Teils des elastisch verformten optischen Elementes 1 beschrieben werden. Für eine vorgegebene Wellenlänge $\lambda$ lässt sich aus der Bedingung $\Delta w < \lambda/n$ der Bereich des elastisch verformbaren Elementes 1 abschätzen, indem die Näherung aus optischer sicht gut geeignet ist. Dabei hat n typischerweise einen Wert von 10 oder 20.

Daraus und mithilfe der ermittelten Gleichung von R ergibt sich der maximale nutzbare Radius zu:

$$r_{\max} = \left( \frac{\lambda}{n \left( \dfrac{w_{\max}}{a^4} + \dfrac{8 w_{\max}{}^3}{a^6} \right)} \right)^{1/4}$$

Beispielhaft können bei einem Wert von

a=2,0 mm
$w_{\max}$=0,05 mm
=> R=20 mm
$\lambda$=633 nm
n=10
$r_{\max}$=0,38 mm

die Brennweite f in den Intervallen [-∞;-10 mm] und [10 mm;∞] variieren. Dabei kann ein kreisförmiger Bereich der aktiven Oberfläche eines elastisch verformbaren optischen Elementes 1 mit einem Durchmesser von 0,75 mm genutzt werden.

Für kleine r ergibt sich eine quadratische Abhängigkeit der elastischen Verformung von r. Eine solche Konfiguration kann aber auch für in Parabelform ausgebildete elastisch verformbare optische Elemente 1 eingesetzt werden.

Erfolgt die Einspannung eines elastisch verformbaren optischen Elementes 1 am Rand nicht fest, sondern z.B. durch geeignete Federn, so wird die Verformung des elastisch verformbaren optischen Elementes 1 am Ort der Einspannung größer als Null und ein Wechsel des Vorzeichens der zweiten Ableitung von w(r) findet zwischen der Einspannung und der Mitte des elastisch verformbaren optischen Elementes nicht mehr statt. Dadurch kann der optisch nutzbare Bereich der optisch wirksamen Oberfläche des elastisch verformbaren Elementes 1 vergrößert werden.

Die vorab angegebenen Erläuterungen und Gleichungen beziehen sich auf ein optisches Element 1 mit konstanter Dicke. Durch eine Variation der Dicke kann auch die Gestalt der elastischen Verformung beeinflusst werden, da einmal die Flächenlast bei der Beschleunigung nicht mehr konstant ist und zum anderen die lokale Steifigkeit des elastisch verformbaren optischen Elementes 1 entsprechend anpassbar ist. So kann die elastische Verformung einen nahezu beliebigen Verlauf annehmen, bzw. im Fall einer sphärischen Verformung der nutzbare Bereich der optisch wirksamen Fläche des elastisch verformbaren Elementes 1 erhöht werden. Eine entsprechende Topologie, insbesondere der der optisch wirksamen Oberfläche des elastisch verformbaren Elementes 1 gegenüberliegenden Oberfläche, die nicht optisch nutzbar ist, kann durch an sich bekannte feinmechanische oder mikromechanische Verfahren ausgebildet werden. Dies ist aber auch durch eine Herstellung mittels Spritzguss, eine entsprechende Laserstrukturierung oder ähnliche Verfahren möglich.

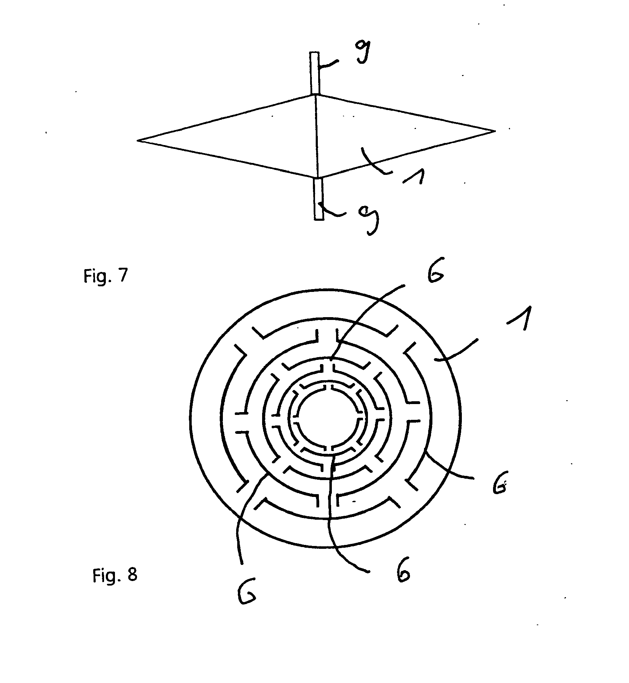

Ein weiteres Beispiel eines elastisch verformbaren optischen Elementes 1 ist in Figur 7 gezeigt.

Dabei sind zwei Dreiecksfedern spiegelsymmetrisch zueinander angeordnet, mit denen das elastisch verformbare optische Element 1 randseitig aufgespannt gehalten ist. Die Dreiecksfedern sind in der Symmetrieachse mittels zwei Biegefedern 9 aufgehängt. Über diese Biegefedern 9 kann die translatorische Bewegung initiiert werden, so dass die entsprechenden Beschleunigungen wirken können. Die translatorische Bewegung erfolgt dabei senkrecht zur Zeichnungsebene.

Dabei kann aus Symmetriegründen die Biegelinie einer einseitig eingespannten Dreiecksfeder betrachtet werden. Dabei gilt:

$$w = w_{\max} \left( r / l \right)^2 \, .$$

Dabei ist r der Abstand von der Einspannung und l die Länge der jeweiligen Dreiecksfeder. Für kleine Auslenkungswege lässt sich die Form, wie im ersten Ausführungsbeispiel, wiederum als sphärische elastische Verformung beschreiben. Dabei entsteht ein zylindrischer Hohl- bzw. Wölbspiegel. Der nutzbare Bereich der optisch wirksamen Oberfläche ergibt sich wiederum aus optischen Überlegungen. Für alle Auslenkungen stellt die Anordnung einen zylindrischen Parabolspiegel dar.

In Figur 8 ist ein weiteres Beispiel eines elastisch verformbaren optischen Elementes 1 dargestellt. Mit einer solchen Ausführungsform kann die Massenverteilung bei einer wirkenden Beschleunigung zu einem sich verändernden Verformungsprofil führen, das in weiten Grenzen beeinflussbar ist. So kann beispielsweise eine sphärische elastische Verformung generiert werden. Es sind aber auch andere elastische Verformungen, die höhere Ortsfrequenzen aufweisen, möglich. Alternativ zu einer gezielten lokal differenzierten Masseverteilung kann aber auch ein gewünschtes Verformungsprofil dadurch zumindest annähernd erreicht werden, dass das elastisch verformbare optische Element 1 in einzelne Segmente unterteilt wird. Diese Segmente sind durch Federn oder Festkörpergelenke verbunden. Bei einer hinreichend hohen Anzahl an Segment und einer kleinen Spaltbreite zwischen den Segmenten ist die durch die Segmentierung hervorgerufene optische Störung vernachlässigbar. Die in Figur 8 mit schwarzen Linien eingezeichneten Spalten 6 trennen die einzelnen Segmente voneinander.

Bei einem Beispiel nach Figur 8 können auf eine optisch wirksame Oberfläche eines so ausgebildeten verformbaren optischen Elements 1 eine dünne reflektierende Membran aufgebracht werden, die zu einem optischen Füllfaktor von 100 % führen kann.

**Patentansprüche**

1. Mikrooptische Anordnung, mit einem plattenförmigen optischen Element, auf das auf eine optisch wirksame Oberfläche elektromagnetische Strahlung gerichtet ist;
dabei das optische Element (1) an mindestens einem äußeren Randpunkt fixiert oder eingespannt ist,
das optische Element (1) massenträgheitsbedingt bei einer translatorischen Bewegung zumindest nahezu parallel zur optischen Achse zwischen zwei Umkehrpunkten ($-z_0$, $z_0$) elastisch verformbar ist
**gekennzeichnet, durch** Aktuatoren, Magneten, *Elektromagneten* oder Elektroden die
die translatorische Bewegung, magnetisch, elektromagnetisch, elektrostatisch und/oder piezoelektrisch initiieren.

2. Anordnung nach Anspruch 1, **dadurch gekennzeichnet, dass** am optischen Element (1) Festkörpergelenke ausgebildet sind.

3. Anordnung nach einem der Ansprüche 1 oder 2, **dadurch gekennzeichnet, dass** Festkörpergelenke mittels punkt- oder nutenförmiger Vertiefungen und/oder Spalten (6) am/im optischen Element (1) ausgebildet sind.

4. Anordnung nach einem der vorhergehenden Ansprüche, **dadurch gekennzeichnet, dass** das optische Element (1) mittels zweier Dreiecksfedern (5) an seinen äußeren Rändern eingefasst ist.

5. Anordnung nach nach einen der vorhergehenden Ansprüche **dadurch gekennzeichnet, dass** mindestens ein Aktuator an einem Rahmen (2) angreift.

6. Anordnung nach einem der vorhergehenden Ansprüche, **dadurch gekennzeichnet, dass** die der optisch wirksamen Oberfläche gegenüberliegend angeordnete Oberfläche des optischen Elementes (1) strukturiert und/oder gewölbt ausgebildet ist.

7. Anordnung nach einem der vorhergehenden Ansprüche, **dadurch gekennzeichnet, dass** elektromagnetische Strahlung über mindestens ein weiteres optisches Element (3) auf die optisch wirksame Oberfläche des optischen Elementes (1) gerichtet ist.

8. Anordnung nach einem der vorhergehenden Ansprüche, **dadurch gekennzeichnet, dass** das optische Element (3) eine optische Linse mit konstanter Brennweite ist.

9. Anordnung nach einem der vorhergehenden Ansprüche, **dadurch gekennzeichnet, dass** elektromagnetische Strahlung mittels eines Strahlteilers (4) auf die optisch wirksame Oberfläche des optischen Elementes (1) gerichtet ist.

10. Anordnung nach einem der vorhergehenden Ansprüche, **dadurch gekennzeichnet, dass** die optisch wirksame Oberfläche des optischen Elementes (1) zumindest an einem Umkehrpunkt der translatorischen Bewegung konkav und am jeweils anderen Umkehrpunkt konvex verformt ist.

11. Anordnung nach einem der vorhergehenden Ansprüche, **dadurch gekennzeichnet, dass** die Brennweite in Folge der elastischen Verformung des optischen Elementes (1) veränderbar ist.

12. Anordnung nach einem der vorhergehenden Ansprüche, **dadurch gekennzeichnet, dass** zwischen Rahmen (2) und äußerem Randbereich eines elastisch verformbaren optischen Elementes (1) Feder- oder Federdämpferelemente angeordnet sind.

## Claims

1. A micro-optical arrangement, with a plate-shaped optical element, onto which electromagnetic radiation is directed onto an optically effective surface;
during this the optical element (1) is fixed or clamped on at least one outer edge point,
the optical element (1) is elastically deformable due to mass inertia upon a translatory movement at least virtually parallel to the optical axis between two reversal points ($-z_0$, $z_0$),
**characterised by** actuators, magnets, electromagnets or electrodes which initiate the translatory movement magnetically, electromagnetically, electrostatically and/or piezoelectrically.

2. An arrangement according to Claim 1, **characterised in that** flexure hinges are formed on the optical element (1).

3. An arrangement according to one of Claims 1 or 2, **characterised in that** flexure hinges are formed by means of point-shaped or groove-shaped recesses and/or gaps (6) on/in the optical element (1).

4. An arrangement according to one of the preceding claims, **characterised in that** the optical element (1) is bordered on its outer edges by means of two triangular springs (5).

5. An arrangement according to one of the preceding claims, **characterised in that** at least one actuator engages on a frame (2).

6. An arrangement according to one of the preceding claims, **characterised in that** the surface of the optical element (1) which is arranged opposite the optically effective surface is formed textured and/or curved.

7. An arrangement according to one of the preceding claims, **characterised in that** electromagnetic radiation is directed on to the optically effective surface of the optical element (1) via at least one further optical element (3).

8. An arrangement according to one of the preceding claims, **characterised in that** the optical element (3) is an optical lens with a constant focal distance.

9. An arrangement according to one of the preceding claims, **characterised in that** electromagnetic radiation is directed onto the optically effective surface of the optical element (1) by means of a beam splitter (4).

10. An arrangement according to one of the preceding claims, **characterised in that** the optically effective surface of the optical element (1) at least at one reversal point of the translatory movement is deformed concavely, and is deformed convexly at the respective other reversal point.

11. An arrangement according to one of the preceding claims, **characterised in that** the focal distance can be changed as a result of the elastic deformation of the optical element (1).

12. An arrangement according to one of the preceding claims, **characterised in that** spring elements or spring damper elements are arranged between the frame (2) and the outer edge region of an elastically deformable optical element (1).

## Revendications

1. Agencement micro-optique, avec un élément optique en forme de plaque, vers lequel un rayonnement électromagnétique est dirigé sur une surface optiquement active ;
l'élément optique (1) étant fixé ou serré au niveau d'au moins un point de bord extérieur, l'élément optique (1) étant élastiquement déformable en raison de l'inertie lors d'un mouvement de translation au moins presque parallèle à l'axe optique entre deux points de retour ($-z_0$, $z_0$),
**caractérisé par** des actionneurs, des aimants, des électroaimants ou des électrodes qui initient magnétiquement, électromagnétiquement, électrostatiquement et/ou piézoélectriquement le mouvement de translation.

**2.** Agencement selon la revendication 1, **caractérisé en ce que** des articulations solides sont formées sur l'élément optique (1).

**3.** Agencement selon l'une quelconque des revendications 1 ou 2, **caractérisé en ce que** les articulations solides sont formées par des renfoncements en forme de points ou de rainures et/ou des fentes (6) sur/dans l'élément optique (1).

**4.** Agencement selon l'une quelconque des revendications précédentes, **caractérisé en ce que** l'élément optique (1) est bordé par deux ressorts triangulaires (5) sur ses bords extérieurs.

**5.** Agencement selon l'une quelconque des revendications précédentes, **caractérisé en ce qu'**au moins un actionneur est en prise sur un cadre (2).

**6.** Agencement selon l'une quelconque des revendications précédentes, **caractérisé en ce que** la surface de l'élément optique (1) opposée à la surface optiquement active est configurée sous une forme structurée et/ou bombée.

**7.** Agencement selon l'une quelconque des revendications précédentes, **caractérisé en ce qu'**un rayonnement électromagnétique est dirigé sur la surface optiquement active de l'élément optique (1) via au moins un autre élément optique (3).

**8.** Agencement selon l'une quelconque des revendications précédentes, **caractérisé en ce que** l'élément optique (3) est une lentille optique avec une distance focale constante.

**9.** Agencement selon l'une quelconque des revendications précédentes, **caractérisé en ce qu'**un rayonnement électromagnétique est dirigé sur la surface optiquement active de l'élément optique (1) au moyen d'un séparateur de faisceaux (4).

**10.** Agencement selon l'une quelconque des revendications précédentes, **caractérisé en ce que** la surface optiquement active de l'élément optique (1) est déformée de manière concave à au moins un point de retour du mouvement de translation et de manière convexe à respectivement l'autre point de retour.

**11.** Agencement selon l'une quelconque des revendications précédentes, **caractérisé en ce que** la distance focale peut être modifiée en conséquence de la déformation élastique de l'élément optique (1).

**12.** Agencement selon l'une quelconque des revendications précédentes, **caractérisé en ce que** des éléments de ressort ou d'amortisseur de ressort sont agencés entre le cadre (2) et la zone de bord extérieur d'un élément optique (1) élastiquement déformable.

Fig. 1

Fig. 2

Fig. 3

Fig. 4

Fig. 5

Fig. 6

EP 1 717 631 B1

Fig. 7

Fig. 8

14

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

• US 20030214734 A1

**In der Beschreibung aufgeführte Nicht-Patentliteratur**

• **S. CORNELLISON.** MEMS Spatial Light Modulators with Integrated Electronics. *MOEMS and Miniaturized Systems II; Proc. SPIE,* 2001, vol. 4561, 28-34